# Europäisches Patentamt
# European Patent Office
# Office européen des brevets

(19)

(11) Veröffentlichungsnummer : **0 171 352**
**B1**

(12)

# EUROPÄISCHE PATENTSCHRIFT

(45) Veröffentlichungstag der Patentschrift :
17.05.89

(51) Int. Cl.⁴ : **H 02 B   1/16**

(21) Anmeldenummer : **85730096.6**

(22) Anmeldetag : **18.07.85**

(54) **Metallgekapselte, druckgasisolierte Hochspannungsschaltanlage.**

(30) Priorität : **25.07.84 DE 3427800**

(43) Veröffentlichungstag der Anmeldung :
**12.02.86 Patentblatt 86/07**

(45) Bekanntmachung des Hinweises auf die Patenterteilung : **17.05.89 Patentblatt 89/20**

(84) Benannte Vertragsstaaten :
**CH DE FR GB LI SE**

(56) Entgegenhaltungen :
**DE–A– 2 557 642**
**FR–A– 1 487 723**

(73) Patentinhaber : **Siemens Aktiengesellschaft Berlin und München**
**Wittelsbacherplatz 2**
**D-8000 München 2 (DE)**

(72) Erfinder : **Lorenz, Dieter, Dipl-Ing.**
**Gärtnerstrasse 1 B**
**D-1000 Berlin 45 (DE)**
Erfinder : **Haarhuis, Jürgen, Ing. grad.**
**Jahnstrasse 17**
**D-1000 Berlin 61 (DE)** .

EP 0 171 352 B1

## Beschreibung

Die Erfindung bezieht sich auf eine metallgekapselte, druckgasisolierte Hochspannungsschaltanlage mit ein- oder mehrpoligen Erdungsschaltern mit messerförmigen beweglichen Schaltstücken, die durch Drehbewegung einer Antriebswelle jeweils in Berührung mit einer Gegenkontaktfläche eines zylindrischen oder kugelförmigen Leiters gelangen und im geöffnetem Zustand in einer am Umfang der im wesentlichen zylindrischen Metallkapselung vorgesehenen Ausbuchtung außerhalb einer dem Innendurchmesser der Metallkapselung entsprechenden Zylinderfläche liegen.

Eine derartige metallgekapselte, insbesondere mit SF$_6$ druckgasisolierte Hochspannungsschaltanlage ist aus der FR-A-1 487 723 bekannt. Bei dieser bekannten Hochspannungsschaltanlage liegen die messerförmigen beweglichen Schaltstücke des Erdungsschalters in geöffnetem Zustand parallel zur Längsachse des zylindrischen Leiters und in geschlossenem Zustand stehen sie rechtwinklig zu ihr. Zur Aufnahme der messerförmigen Schaltstücke in geöffnetem Zustand dienen Ausbuchtungen am Umfang der Metallkapselung, die sich ebenfalls in Längsrichtung der Metallkapselung erstrecken. Die Länge der Metallkapselung muß also unter Berücksichtigung der Länge dieser messerförmigen Schaltstücke gewählt werden. Die bekannte Anordnung hat weiterhin noch den Nachteil, daß bei geschlossener Stellung des Erdungsschalters durch den Leiter, das Messerschaltstück des Erdungsschalters und die Metallkapselung eine Stromschleife gebildet wird, so daß je nach Richtung eines möglicherweise fließenden Stromes auf die Kontakte den Kontaktdruck verändernde Stromkräfte ausgeübt werden können.

Erdungsschalter mit geraden messerförmigen beweglichen Schaltstücken sind auch aus der in der Siemens-Druckschrift E-129/1943 « Auf Zukunft schalten mit SF$_6$-isolierten Schaltanlagen », Seiten 4 und 5 bekannt. Diese Messererdungsschalter sind sowohl im Druckbehälter mit dem Kabelabzweig als auch in dem Druckbehälter mit dem Leistungsschalter und den Anschlußleitern, die zu den Druckbehältern mit den Sammelschienen führen, eingesetzt. Die messerförmigen Schaltstücke der Erdungsschalter liegen in eingeschaltetem Zustand in Richtung der Leiterlängsachse und stehen im ausgeschaltetem Zustand schräg abgewinkelt. Ihre Antriebswelle steht senkrecht zu den Leitern. Deshalb muß in dem Druckbehälter sowohl im Durchmesser als auch in der axialen Länge genügend Raum, der im wesentlichen durch die Länge des beweglichen Schaltstückes bestimmt ist, für den Erdungsschalter vorgesehen sein.

Weiterhin ist in der DE-A-25 57 642 eine besondere Konstruktion eines Trennschalters einer metallgekapselten, druckgasisolierten Hochspannnugsschaltanlage beschrieben. Die Trennstrecke dieses bekannten Trennschalters wird durch Kontaktbrücken geschlossen, die an isolierenden Winkelhebeln befestigt sind. Diese Winkelhebel schwenken die Kontaktbrücken bei der Ausschaltung, hervorgerufen durch die Bewegung eines Betätigungsringes, in eine geöffnete Stellung, in welcher ein Teil der Winkelhebel in tangentialer Richtung zur Metallkapselung liegt. Da der Betätigungsring für die Winkelhebel aber ebenso wie diese auch innerhalb der Metallkapselung liegt, muß deren Innendurchmesser größer als die Trennstrecke zwischen dem Leiter und den im geöffnetem Zustand des Trennschalters benachbart liegenden Teilen gewählt sein. Auch bei dieser bekannten Anordnung ist eine Ausbuchtung am Umfang der Metallkapselung vorgesehen, in dieser ist das Antriebssystem für die Schwenkung des Betätigungsringes untergebracht.

Der Erfindung liegt die Aufgabe zugrunde, in einer metallgekapselten, druckgasisolierten Hochsapnnungsschaltanlage der eingangs beschriebenen Art eine platzsparenden Anordnung eines Messererdungsschalters zu schaffen.

Zur Lösung dieser Aufgabe verläuft bei einer metallgekapselten, druckgasisolierten Hochspannungsschaltanlage der eingangs beschriebenen Art gemäß der Erfindung die Ausbuchtung in Umfangsrichtung über einen Teil des Umfanges der Metallkapselung, das oder die messerförmigen Schaltstücke liegen in geöffnetem Zustand in dieser Ausbuchtung tangential zu der dem Innendurchmesser der Metallkapselung entsprechenden gedachten Zylinderfläche und die Antriebswelle verläuft parallel zu dem oder den Leitern.

Die messerförmigen beweglichen Schaltstücke des Erdungsschalters liegen somit längs des Umfanges der Metallkapselung tangential zu der dem Innendurchmesser entsprechenden gedachten Zylinderfläche ausgerichtet, d. h. in einer senkrecht zur Achse der Metallkapselung bzw. des Leiters stehenden, radialen Ebene. Diese querliegende Anordnung ermöglicht eine Verkürzung der Metallkapselung in axialer Länge. Da die messerförmigen beweglichen Schaltstücke in geöffnetem Zustand außerhalb des Innendurchmessers der Metallkapselung liegen, ist die gegebene freie Trennstrecke durch sie nicht beeinträchtigt. In geschlossenem Zustand können keine Stromkräfte in Drehrichtung der messerförmigen Schaltstücke auftreten, da deren Antriebswelle parallel zu den Leitern verläuft.

Die Ausbuchtung der Metallkapselung zur Aufnahme der messerförmigen Schaltstücke des Erdungsschalters kann angegossen sein, oder auch zur Vereinfachung der Zugänglichkeit aus einem angeflanschten Bauteil bestehen, dessen Flächen z. B. miteinander verschweißt sind. Es kann auch zweckmäßig sein, einen Montagestutzen zur Unterbringung des Erdungsschalters auszunutzen.

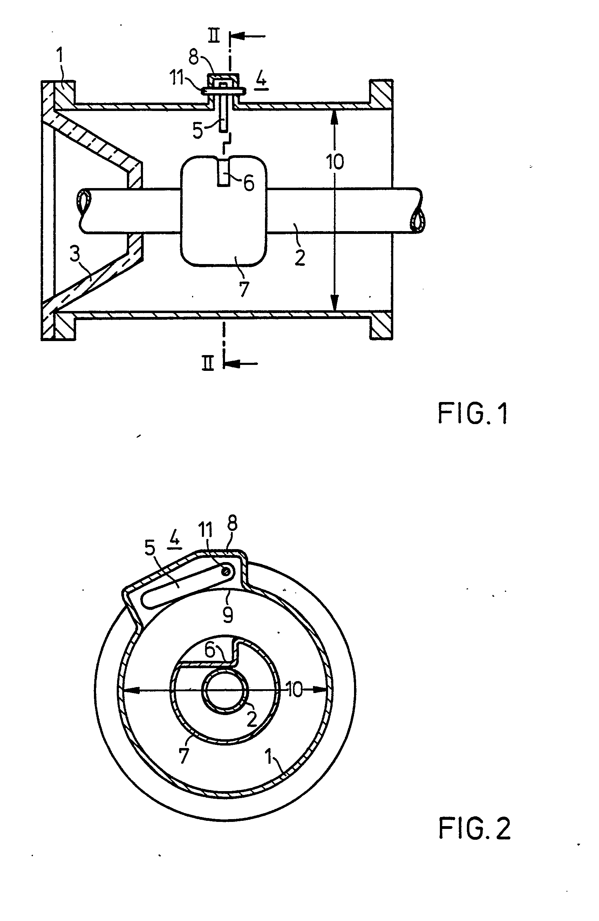

Im folgenden sei die Erfindung noch anhand des in den Figuren 1 und 2 schematisch dargestellten Ausführungsbeispiels näher erläutert.

Fig. 1 zeigt einen Längsschnitt durch einen Druck-behälter einer metallgekapselten, druckgasisolier-ten Hochspannungsschaltanlage, Fig. 2 einen Radialschnitt entlang der Linie II-II in Fig. 1.

Eine mit SF$_6$ druckgasisolierte, metallgekapsel-te Hochspannungsschaltanlage enthält einen Druckbehälter der zylindrischen Metallkapselung 1, in dem sich mittig der zylindrische Leiter 2 z. B. einer Sammelschiene befindet. Dieser wird durch den scheibenförmigen Isolator 3 konzentrisch zur Metallkapselung 1 abgestützt. Um den Leiter 2 erden zu können, ist ein Erdungsschalter 4 mit einem geraden, messerförmigen beweglichen Schaltstück 5 vorgesehen. Entsprechend weist der Leiter 2 eine Gegenkontaktfläche 6 auf, die von einer Abschirmung 7 umgeben ist.

Zur Aufnahme des Erdungsschalters 4 ist die Metallkapselung 1 mit einer über einen Teil des Umfangs verlaufenden Ausbuchtung 8 versehen, in der das messerförmige Schaltstück 5 in geöffnetem Zustand tangential zu einer gedachten Zylinderfläche 9 (siehe Fig. 2) liegt, die dem durch Pfeile 10 angedeuteten Innendurchmesser der Metallkapselung 1 entspricht. Dadurch ragt das messerförmige bewegliche Schaltstück 5 in geöffnetem Zustand nicht in die freie Trennstrecke zwischen der Metallkapselung 1 und der Abschirmung 7 hinein.

Die Bewegung des messerförmigen beweglichen Schaltstückes 5 wird durch eine Antriebswelle 11 hervorgerufen. Diese Antriebswelle durchsetzt die Ausbuchtung 8 und verläuft parallel zum Leiter 2 bzw. zur Längsachse der Metallkapselung 1. Bei Drehung der Antriebswelle 11 wird das messerförmige bewegliche Schaltstück 5 von seiner tangentialen Lage im geöffneten Zustand in eine radiale Lage heruntergeklappt und gelangt in Berührung mit der Gegenkontaktfläche 6, so daß der Leiter 2 geerdet ist. Auf die Anlage des messerförmigen beweglichen Schaltstückes an der Gegenkontaktfläche werden durch diese besondere Anordnung in eingeschaltetem Zustand keine Stromkräfte ausgeübt, die in Drehrichtung der messerförmigen Schaltstücke wirken. Der Raumbedarf des Erdungsschalters 4 in axialer Richtung der Metallkapselung 1 ist äußerst gering.

## Patentansprüche

1. Metallgekapselte, druckgasisolierte Hoch-spannungsschaltanlage mit ein- oder mehrpoli-gen Erdungsschaltern (4) mit messerförmigen beweglichen Schaltstücken (5), die durch Drehbewegung einer Antriebswelle (11) jeweils in Berührung mit einer Gegenkontaktfläche (6) eines zylindrischen oder kugelförmigen Leiters (2) gelangen und in geöffnetem Zustand in einer am Umfang der im wesentlichen zylindrischen Metallkapselung (1) vorgesehenen Ausbuchtung (8) außerhalb einer dem Innendurchmesser (10) der Metallkapselung (1) entsprechenden Zylinderfläche (9) liegen, dadurch gekennzeichnet, daß die Ausbuchtung (8) in Umfangsrichtung über einen Teil des Umfanges der Metallkapselung (1) verläuft, daß das oder die messerförmigen Schaltstücke (5) in geöffnetem Zustand in dieser Ausbuchtung (8) tangential zu der dem Innendurchmesser der Metallkapselung entsprechenden gedachten Zylinderfläche (9) liegen und daß die Antriebswelle (11) parallel zu dem oder den Leitern (2) verläuft.

2. Metallgekapselte, druckgasisolierte Hoch-spannungsschaltanlage nach Anspruch 1, da-durch gekennzeichnet, daß die Ausbuchtung (8) aus einem angeflanschten Bauteil besteht.

3. Metallgekapselte, druckgasisolierte Hoch-spannungsschaltanlage nach Anspruch 1, da-durch gekennzeichnet, daß die Ausbuchtung (8) ein Montagestutzen ist.

## Claims

1. Metal-enclosed, compressed gas-insulated high-voltage switchgear with single-pole or multipole earthing switches (4) with blade-shaped moving contact pieces (5) which come into contact with a respective opposing contact face (6) of a cylindrical or spherical conductor (2) owing to the rotational movement of a driving shaft (11) and, in the open state, lie in a projection (8) provided on the periphery of the substantially cylindrical metal enclosure (1) outside a cylinder face (9) corresponding to the internal diameter (10) of the metal enclosure (1), characterised in that the projection (8) runs in the peripheral direction over a proportion of the periphery of the metal enclosure (1), in that the blade-shaped contact piece or pieces (5) lie tangentially to the imaginary cylinder face (9) corresponding to the internal diameter of the metal enclosure in this projection (8) in the open state and in that the driving shaft (11) runs parallel to the conductor or conductors (2).

2. Metal-enclosed, compressed gas-insulated high-voltage switchgear according to claim 1, characterised in that the projection (8) consists of a flange-mounted component.

3. Metal-enclosed, compressed gas-insulated high-voltage switchgear according to claim 1, characterised in that the projection (8) is a connecting sleeve.

## Revendications

1. Installation de distribution électrique haute tension du type à blindage métallique et à isolation par un gaz sous pression, avec des interrupteurs de mise à la terre (4) mono ou multipolaires comportant des pièces de contact mobiles (5) en forme de couteaux, venant respectivement, par suite d'un mouvement de rotation d'un arbre d'entraînement, en contact avec une surface de contact antagoniste (6) d'un conducteur (2) de forme cylindrique ou sphérique et se situant, à l'état d'ouverture, dans une cavité (8) prévue dans la périphérie du blindage métallique (1) de forme sensiblement cylindrique, en dehors d'une surface cylindrique (9) qui correspond au diamètre intérieur (10) du blindage métallique, caractérisée par le fait que la cavité (8) s'étend, dans le sens périphérique, sur une partie de la périphérie du blindage métallique (1), que la ou les pièces de contact (5) en forme de couteaux se situent, à l'état d'ouverture, dans cette cavité (8), tangentiellement à la surface cylindrique imaginaire (9) qui correspond au diamètre intérieur du blindage métallique, et que l'arbre d'entraînement (11) s'étend parallèlement au conducteur ou aux conducteurs (2).

2. Installation de distribution électrique haute tension du type à blindage métallique et à isolation par un gaz sous pression, caractérisé par le fait que la cavité (8) est constituée par un élément bridé.

3. Installation de distribution électrique haute tension du type à blindage métallique et à isolation par un gaz sous pression, caractérisé par le fait que la cavité (8) est constituée par un embout de montage.

FIG.1

FIG.2